# EUROPÄISCHE PATENTSCHRIFT

(11) **EP 1 138 172 B1**
(45) Veröffentlichungstag und Bekanntmachung des Hinweises auf die Patenterteilung: **18.04.2007**
(21) Anmeldenummer: 99965383.5
(22) Anmeldetag: 01.12.1999
(51) Int. Cl.: H04Q 7/38

(54) **VERFAHREN ZUR REDUZIERUNG DER ZUR NACHBARKANALÜBERWACHUNG NÖTIGEN UNTERBRECHUNGSPAUSEN**
METHOD FOR REDUCING THE NUMBER OF INTERRUPT PHASES NECESSARY FOR MONITORING ADJACENT CHANNELS
PROCEDE POUR REDUIRE LES PHASES D'INTERRUPTION NECESSAIRES POUR LA SURVEILLANCE DE CANAUX VOISINS

(30) Priorität: 07.12.1998 DE 19856401
(43) Veröffentlichungstag der Anmeldung: 04.10.2001
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE1999/003806
(87) Internationale Veröffentlichungsnummer: WO 2000/035224

(56) Entgegenhaltungen:
- WO-A-92/10886
- WO-A-94/29981
- WO-A-97/25827
- US-A- 5 177 740

## Beschreibung

Die Erfindung betrifft eine Basisstation eine Mobilstation und ein Verfahren zur Datenübertragung in einem Kommunikationssystem, insbesondere in einem CDMA-Mobilfunksystem, wobei die Daten strukturiert in Rahmen derart übertragen werden, daß es einer Mobilstation möglich ist, während einer oder mehrerer Unterbrechungsphasen, in der bzw. in denen sie das Empfangen (der bisherigen Quelle oder der Daten der Basisstation) und/oder das Verarbeiten empfangener Daten oder das Senden unterbricht, andere Funktionen auszuführen, insbesondere über eine Empfangseinrichtung Messungen durchzuführen. Unter "Übertragen" wird im folgenden auch Senden und/oder Empfangen verstanden.

In Kommunikationssystemen werden Daten (beispielsweise Sprachdaten, Bilddaten oder Systemdaten) auf Übertragungsstrecken zwischen Basisstationen und Mobilstationen übertragen. Bei Funk-Kommunikationssystemen erfolgt dies mit Hilfe von elektromagnetischen Wellen über eine Luft- oder Funkschnittstelle. Dabei werden Trägerfrequenzen genutzt, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das ein CDMA(Code Division Multiple Access System)-Verfahren einsetzende UMTS (Universal Mobile Telecommunication System) oder andere Systeme der dritten Generation sind Frequenzen im Frequenzband von 2.000 MHz vorgesehen.

Insbesondere in zukünftigen CDMA-Systemen wird beispielsweise in Abwärtsrichtung, das heißt in der Richtung von einer Basisstation zu einer Mobilstation, von der Basisstation im wesentlichen kontinuierlich gesendet. Die beim Senden übertragenen Daten sind üblicherweise in Rahmen strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. Die Struktur und/oder Länge jedes Rahmens in einer kontinuierlichen Folge von Rahmen ist jedoch vorgegeben und/oder wird durch die Mobilstation erkannt.

Insbesondere in zellularen Mobilfunksystemen muß die Mobilstation gelegentlich auch andere Funktionen als Datenempfang ausführen, die zumindest beim Betrieb nur einer einzigen Empfangseinrichtung nicht gleichzeitig ausgeführt werden können. Beispielsweise muß die Mobilstation in einem zellular aufgebauten Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt.

Um ohne Unterbrechung von der Basisstation zu der Mobilstation senden zu können, wurde bereits vorgeschlagen, die Mobilstation mit einer zweiten Empfangseinrichtung auszustatten. Aus Kostengründen wird diese Lösung in der Praxis jedoch meist abgelehnt.

Es ist ein anderer Vorschlag aus WO-A 9725827 bekannt, nach welchem die Basisstation das Senden zu vorgegebenen Zeiten unterbricht, um es der Empfangsstation zu ermöglichen, eine Nachbarkanalsuche bzw. Nachbarkanalüberwachung (Suche nach einer benachbarten Basisstation oder nach von diesen Basisstationen ausgesendeten bestimmten Datenpaketen, worunter im folgenden auch Synchronisations-, Frequenzkorrektur- oder Pilotsignalbursts verstanden werden können) über ihre einzige Empfangseinrichtung durchzuführen.

Um einen Datenverlust zu vermeiden, sendet die Basisstation die Daten zuvor mit einer höheren Senderate als mit der im wesentlichen konstanten Dauer-Senderate. Damit dies nicht zu höheren Bitfehlerraten (BER) führt, muß zusätzlich während dieser Zeit die Sendeleistung erhöht werden.

Die Frequenz, mit der die Unterbrechungsphasen wiederkehren, und die Länge der Unterbrechungsphasen hängen von dem jeweiligen System und auch von dem jeweiligen Betriebszustand des Systems ab. Da mit der Anzahl der eingefügten Unterbrechungsphasen auch die Einbußen in der Übertragungsqualität zunehmen, besteht der Wunsch, möglichst wenige bzw. möglichst kurze Unterbrechungsphasen einzulegen.

Aufgabe der vorliegenden Erfindung ist es nun, ein Verfahren zur Datenübertragung in einem Mobilfunksystem, eine Mobilstation und eine Basisstation anzugeben, die eine zuverlässige Nachbarkanalüberwachung mit einer gegenüber dem Stand der Technik reduzierten Anzahl von Unterbrechungsphasen ermöglicht.

Die Aufgabe wird durch die unabhängigen Patentansprüche gelöst. Weiterbildungen sind Gegenstand der abhängigen Ansprüche.

Die Erfindung beruht demnach auf dem Gedanken, während zu Synchronisationszwecken in einen Datenstrom eingefügten Unterbrechungsphasen, nicht nur auf den Empfang charakteristischer Datenpakete zu schalten, sondern auch auf den Empfang zu detektierender Datenpakete zu schalten.

Während also beispielsweise in Abwärtsrichtung Daten von einer ersten Basisstation zu einer Mobilstation übertragen werden, werden zumindest während bestimmter Sendephasen Unterbrechungsphasen eingelegt, in denen die Mobilstation das Empfangen der von der ersten Basisstation gesendeten Daten und/oder das Verarbeiten der empfangenen Daten oder das Senden unterbricht, wird die Mobilstation auf den Empfang von charakteristischen und zu detektierenden Datenpakete, die von einer zweiten Basisstation gesendet werden, geschaltet.

So ist es möglich, durch das Ausnutzen der bekannten Rahmenstruktur der Datenübertragung von der zweiten Basisstation zur Mobilstation die Anzahl und/oder die Dauer der einzufügenden Unterbrechungsphasen gering zu halten. Dadurch ist es möglich, die benötigte effektive Gesamtdauer der Unterbrechungsphasen zu verringern, und damit die Übertragungsqualtität zu erhöhen.

Bei einem ersten Übertragungsverfahren, das von einer ersten Basisstation verwendet wird, kann es sich dabei um ein CDMA-Verfahren handeln, und bei einem zweiten Übertragungsverfahren, das von einer zweiten Basisstation verwendet wird, um ein GSM-Verfahren handeln. Die Erfindung kann dabei Teil eines Up- bzw. Downlink-Gesamtkonzeptes für ein GSM-UMTS-Dualmode-Mobilfunksystem sein.

Eine Weiterbildung der Erfindung sieht vor, in Abhängigkeit von einem Empfangsergebnis, das während der Unterbrechungsphasen, in denen die Empfangseinrichtung auf den Empfang von Datenpaketen der zweiten Basisstationen geschaltet ist, erzielt wird, Informationen von der Mobilstation zur ersten Basisstation zu senden die das Einlegen von Unterbrechungsphasen beeinflussen. Unter Beeinflussung des Einlegens von Unterbrechungsphasen versteht man auch eine Einschränkung der Anzahl zukünftiger Unterbrechungsphasen und/oder die Beendigung des Einlegens von Unterbrechungsphasen und/oder eine gesteuerte Fortsetzung des Einlegens weiterer Unterbrechungsphasen und/oder die Steuerung der Dauer der Unterbrechungsphasen.

So ist es möglich, das Einlegen von Unterbrechungsphasen möglichst bald zu beenden und somit möglichst einzuschränken, sobald genügend Informationen über die zu beobachtenden zweiten Basisstationen bekannt sind und somit die Übertragungsqualität zu verbessern.

Eine andere Weiterbildungsvariante der Erfindung sieht vor, daß die Mobilstation nacheinander auf den Empfang von Datenpaketen mehrerer Basisstationen geschaltet wird, und in Abhängigkeit von den Empfangsergebnissen Informationen zur ersten Basisstation gesendet werden, die das Einlegen der Unterbrechungsphasen beeinflussen.

Dadurch wird erreicht, nacheinander mehrere Nachbarbasisstationen zu beobachten und nach deren ausreichender Beobachtung das Einlegen von Unterbrechungsphasen zunächst zu beenden.

Eine weitere Ausgestaltung der Erfindung sieht vor, die Informationen zur Beeinflussung des Einlegens der Unterbrechungsphasen und Informationen über zweite und/oder dritte Basisstationen mittels derselben Nachricht zu übermitteln.

Dies ermöglicht es, mit möglichst wenig Signalisierungsaufwand Nachbarbasisstationen zu beobachten und Informationen über die Beobachtungsergebnisse zu übermitteln.

Anhand der Zeichnungen werden nun Ausführungsbeispiele der Erfindung näher beschrieben. Die Erfindung ist jedoch nicht auf diese Ausführungsbeispiele beschränkt. Die einzelnen Figuren der Zeichnung zeigen:
Fig. 1 Prinzipschaltbild eines Mobilfunksystems;
Fig. 2 Prinzipschaltbild einer Mobilstation;
Fig. 3 schematische Darstellung der Einfügung von Unterbrechungsphasen während einer Sendephase;
Fig. 4 schematische Darstellung des Synchronisationsschemas bei GSM-Systemen; Fig. 5 schematische Darstellung einer Ausführungsvariante des erfindungsgemäßen Synchronisationsschemas.

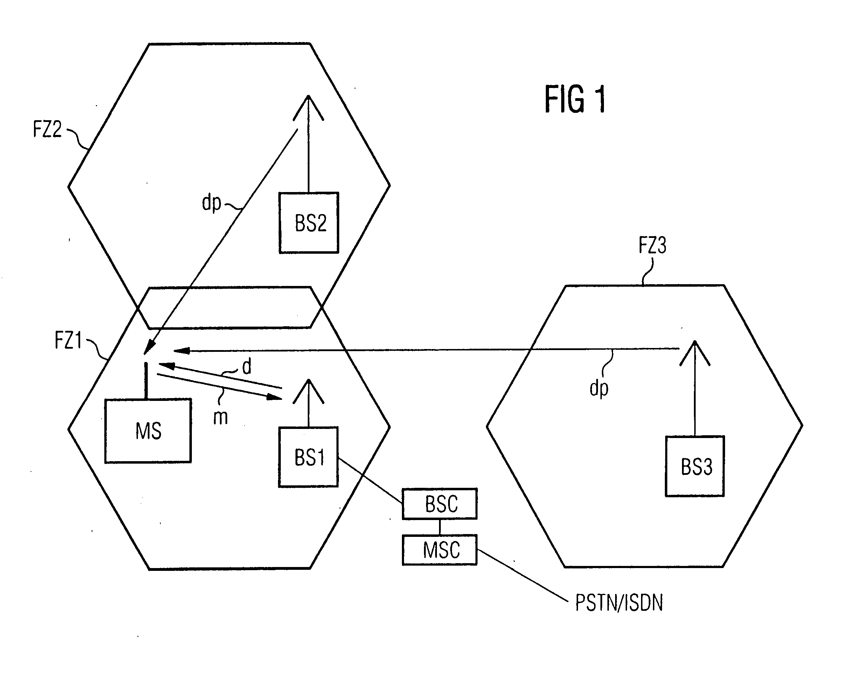

In Figur 1 ist ein zellulares Mobilfunknetz, das beispielsweise aus einer Kombination eines GSM (Global System for Mobile Communication)-Systems mit einem UMTS (Universal Mobile Telecommunication System) - System besteht, dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroler BSC verbunden, der auch durch ein Datenverarbeitungssystem gebildet sein kann.

Jeder Basisstationscontroler BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen innerhalb von Funkkanälen, die innerhalb von Frequenzbändern liegen, übertragen werden. Die Reichweite der Funksignale einer Basisstation definieren im wesentlichen eine Funkzelle FZ.

Basisstationen BS und ein Basisstationscontroler BSC können zu einem Basisstationssystem zusammengefaßt werden. Das Basisstationssystem BSS ist dabei auch für die Funkkanalverwaltung bzw. -zuteilung, die Datenratenanpaßung, die Überwachung der Funkübertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie beispielsweise dem GSM-System, für den Uplink (Mobilstation zur Basisstation) andere Frequenzbänder vorgesehen sein als für den Downlink (Basisstation zur Mobilstation) und bei TDD (Time Division Duplex)-Systemen, wie das DECT (Digital Enhanced Cordless Telecommunications)-System für den Up- bzw. Downlink unterschiedliche Zeitabschnitte vorgesehen sein. Innerhalb der unterschiedlichen Frequenzbänder können durch ein FDMA (Frequency Division Multiple Access) Verfahren mehrere Frequenzkanäle realisiert werden.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme wie CDMA-Systeme, insbesondere Wide-Band-CDMA-Systeme oder TD/CDMA-Systeme abgebildet werden. Unter erster Basisstation BS1 versteht man insbesondere eine UMTS-Basisstation oder eine CDMA-Basisstation, unter zweiten und/oder dritten Basisstationen BS2,BS3 insbesondere zu beobachtende GSM-(Nachbar)Basisstationen und unter Mobilstation insbesondere eine Dualmode-Mobilstation, die sowohl für den Empfang/das Senden von GSM-Signalen als auch für den Empfang/das Senden von UMTS-Signalen oder CDMA-Signalen ausgestaltet ist, die gegebenenfalls auch für einen stationären Betrieb hergerichtet sein kann.

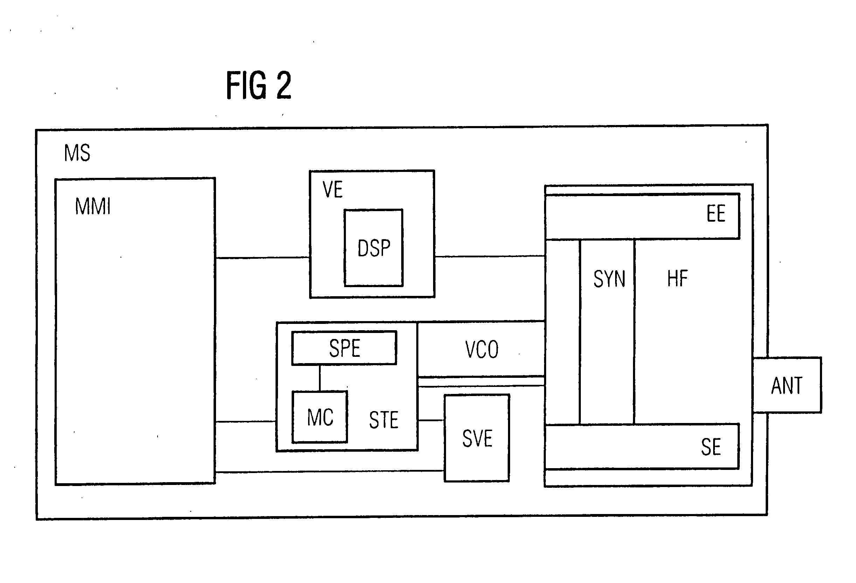

Figur 2 zeigt eine Funkstation, die eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung EE und einer Sendeeinrichtung SE.

Die Steuereinrichtung STE besteht im wesentlichen aus einem programmgesteuerten Mikrocontroller MC, der schreibend und lesend auf Speicherbausteine SPE zugreifen kann. Der Mikrocontroller MC steuert und kontrolliert alle wesentlichen Elemente und Funktionen der Funkstation, steuert im wesentlichen den Kommunikations- und Signalisierungsablauf, reagiert auf Tastatureingaben, indem er die entsprechenden Steuerprozeduren ausführt und ist auch für die Versetzung des Gerätes in unterschiedlich Betriebzustände zuständig.

Die Verarbeitungseinrichtung VE kann auch durch einen digitalen Signalprozessor DSP gebildet sein, der ebenfalls auf Speicherbausteine SPE zugreifen kann.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden, Geräteinformationen, vom Benutzer eingegebene Informationen und während der Verarbeitung von Signalen entstehende Informationen gespeichert.

Der Hochfrequenzteil HF besteht aus der Sendeeinrichtung SE, mit einem Modulator und einem Verstärker und einer Empfangseinrichtung EE mit einem Demodulator und ebenfalls einem Verstärker.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszilators VCO kann auch der Systemtakt zur Taktung von Prozessoreinrichtungen des Gerätes erzeugt werden.

Zum Empfang und zum Senden von Signalen über die Luftschnittstelle eines Mobilfunksystems ist eine Antenneneinrichtung ANT vorgesehen.

Bei der Funkstation kann es sich auch um eine Basisstation BS handeln. In diesem Fall wird die Bedieneinheit durch eine Verbindung zu einem Mobilfunknetz, beispielsweise über einen Basisstationscontroler BSC bzw, eine Vermittlungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtungen.

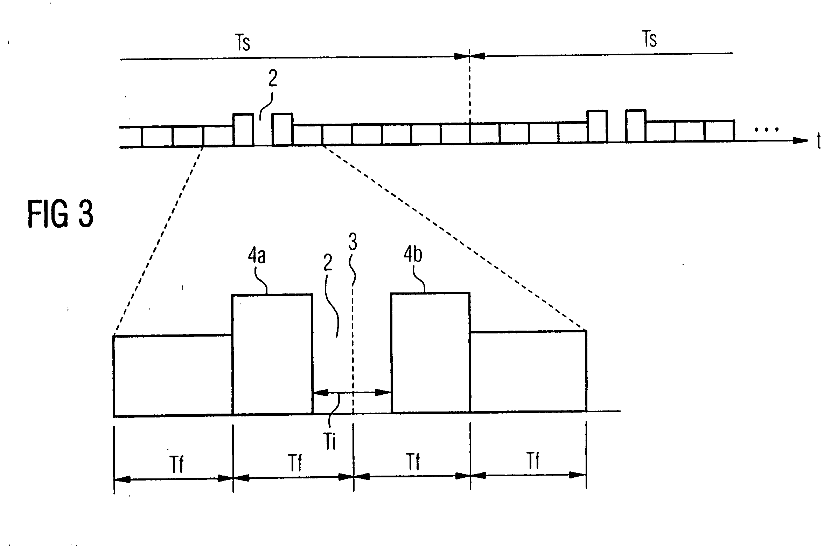

Fig. 3 zeigt die Rahmenstruktur einer Datenübertragung mit geringer Verzögerungszeit, insbesondere der Sprachübertragung in einem UMTS (Universal Mobile Telecommunication System), in dem jeweils innerhalb eines Multirahmens zwölf einzelne Rahmen 1 zur Datenübertragung enthalten sind. Dabei zeigt die Darstellung insbesondere eine Sendephase im Downlink von einer ersten Basisstation BS1, insbesondere einer UMTS-Basisstation BS1 zu einer Mobilstation MS, insbesondere einer Dualmode-Mobilstation MS, die neben dem Empfang von UMTS-Daten auch für den Empfang von GSM-Datenpaketen ausgestaltet ist. Die im folgenden angestellten Ausführungen sind im wesentlichen auf den Downlink beschränkt. Es ist aber selbstverständlich, daß die Erfindung nicht nur in eine DownlinkÜbertragung, sondern auch in eine Uplink-Übertragung eingebracht werden kann. Es liegt in Rahmen des fachmännischen Handelns die im folgenden aufgezeigten Ausführungsbeispiele für den Downlink in eine Uplink-Übertragung einzubringen.

Die einzelnen Rahmen 1 haben jeweils eine Sendelänge Tf von 10 ms, so daß der Multirahmen insgesamt eine Sendelänge Ts von 120 ms hat. Jeweils der fünfte und der sechste einzelne Rahmen 1 weisen eine gemeinsame, gegebenenfalls ihre Rahmengrenze 3 überlappende Unterbrechungsphase 2 auf, die eine Länge Ti hat. Die Länge Ti beträgt beispielsweise 6 ms. Die Teilabschnitte des ersten Rahmens 4a, der vor der Unterbrechungsphase 2 beginnt, und des zweiten Rahmens 4b, der nach der Unterbrechungsphase 2 endet, sind gleich lang beziehungsweise gleich groß. Dabei wird während der Unterbrechungsphasen zumindest das Senden von Daten zu einer bestimmten, die Nachbarkanalsuche durchführenden Mobilstation unterbrochen, während das Senden zu anderen Mobilstationen fortgesetzt werden kann, was durch den Einsatz eines Vielfachzugriffsverfahrens, beispielsweise eines CDMA-Verfahrens, ermöglicht wird.

Bei dem in Fig. 3 gezeigten Ausführungsbeispiel werden Sprachdaten übertragen, so daß eine maximale Verzögerung bei der Auswertung der von der Mobilstation empfangenen Daten in Höhe von 10 ms, das heißt einer Rahmenlänge Tf, akzeptabel ist. Die Daten innerhalb eines Rahmens werden umsortiert, gemeinsam codiert und einander überlagert gesendet. Im Ausführungsbeispiel werden die Senderate des ersten Rahmens 4a und des zweiten Rahmens 4b jeweils derart erhöht, daß die gleiche Menge von zu sendenden Informationen, die in nicht komprimierten Rahmen 1 über die Rahmenlänge Tf hinweg gesendet werden, in einem Zeitraum Tc = Tf - Ti/2 gesendet werden.

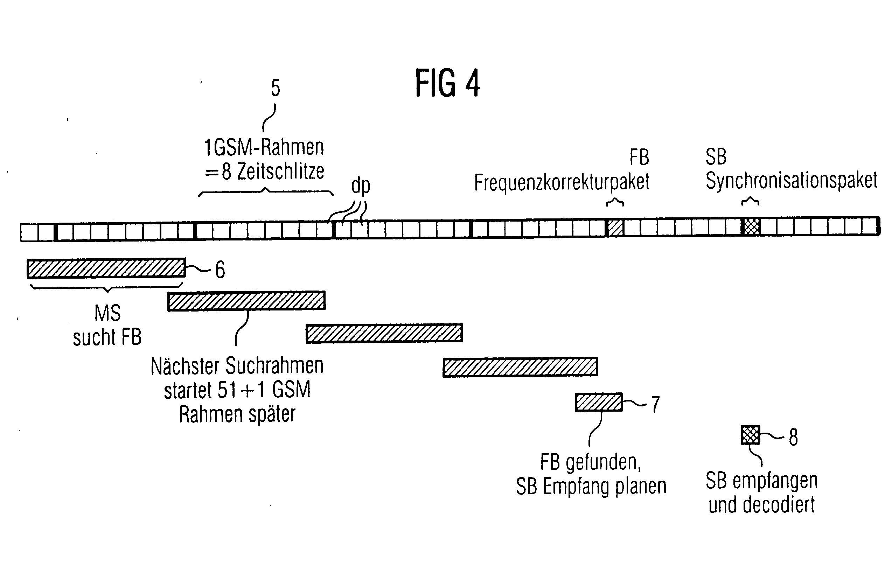

Im folgenden wird anhand der Figur 4 das herkömmliche GSM-Synchronisations- bzw. Nachbarkanalsuch-Schema kurz erläutert. Ein durch die GSM-Basisstation ausgesendeter GSM-Rahmen enthält acht Zeitschlitze, in denen jeweils ein Datenpaket dp enthalten ist. Die von den GSM-Basisstationen BS2 ausgesendeten Datenpakete, wie z.B. das Frequenzkorrektur-Datenpaket FB (charakteristisches Datenpaket, FCCH-Datenpaket, Frequency Correction Burst), das Synchronisations-Datenpaket SB (zu detektierendes Datenpaket, SCH-Datenpaket, Synchronisation Burst) und das Normaldatenpaket gehorchen alle dem gleichen Zeitraster.

Eine GSM-Super-Frame-Struktur besteht aus 26 GSM-Rahmen 5 und dauert 120 ms. Während dieser GSM-Super-Frame-Struktur wird eine Idle-Periode in den Downlink eingefügt, die für Messungen, wie die Nachbarkanalsuche vorgesehen ist.

Von den GSM-Basisstationen werden 4 mal alle 10 Zeitrahmen (GSM-Rahmen) und daraufhin nach 11 Zeitrahmen (GSM-Rahmen)(insgesamt 51 Zeitrahmen) ein Frequenzkorrekturdatenpaket und jeweils einen Zeitrahmen später ein Synchronisationsdatenpaket ausgesendet. Würden nun Unterbrechungsphasen entsprechend dem GSM-Standard mit einer Periode von 26 Zeitrahmen (GSM-Rahmen) eingefügt, so würde aufgrund der Tatsache, daß die Periode von 51 Zeitrahmen und die Periode von 26 Zeitrahmen keinen gemeinsamen Teiler haben, eine zyklische Verschiebung der beiden Zeitrahmenperioden stattfinden, so daß nach maximal 11 mal 26 Zeitrahmen, also nach 11 Beobachtungsrahmen ein Empfang des gesuchten zu detektierenden SCH-Datenpaketes erfolgen würde, falls die Mobilstation MS nicht zu weit von der jeweiligen benachbarten Basisstation BS2, BS3 entfernt ist oder zu starke Störungen bei der Übertragung auftreten. Der FCCH ist in den Rahmennummern 0, 10, 20, 30 und 40 angeordnet. Ziel der Nachbarkanalsuche ist auch die Detektion eines zu detektierenden Synchronisationsdatenpaketes. Dieses Ziel kann auch über den Empfang eines charakteristischen Frequenzkorrekturdatenpaketes, erreicht werden, da aufgrund der bekannten Rahmenstruktur nach dem Empfang eines Frequenzkorrekturdatenpaketes die Lage eines Synchronisationsdatenpaketes bekannt ist. Daher sucht die Mobilstation zunächst nach dem FCCH-Datenpaket FB 6, bis es nach einer erfolgreichen Suche 7 auf den Empfang des SCH-Datenpakets in der nächsten Idle-Periode geschaltet wird 8.

Unter Beobachtungsrahmen versteht man im Rahmen der Anmeldung auch eine Zeitdauer, die mindestens erforderlich ist, um einen GSM-Rahmen zu beobachten. Die genaue Dauer eines Beobachtungsrahmens ist dabei implementierungsabhängig; sie ist jedoch um eine vollständige Detektion eines GSM-Rahmens zu gewährleisten und um die Zeit, die zum Umschalten der Syntheziserfrequenz benötigt wird, zu berücksichtigen, in der Regel länger als die Dauer eines GSM-Rahmens und kann so auch eine Dauer von 9 Zeitschlitzen, 10 Zeitschlitzen (5,7 ms), 11 Zeitschlitzen oder 12 Zeitschlitzen (6,9 ms) aufweisen.

Das gleiche Schema kann auch zur Nachbarkanalsuche oder Synchronisation mit GSM-Basisstationen während einer UMTS-Verbindung eingesetzt werden, wobei die Idle-Perioden durch Unterbrechungsphasen, die in den UMTS-Downlink-Datenstrom eingefügt werden, ersetzt werden.

Die Anzahl der Unterbrechungsphasen, die benötigt werden, um ein FCCH-Datenpaket zu finden, hängt von der Wiederholungsrate der FCCH-Datenpakete- ab. Wenn die Anzahl der FCCH-Datenpakete, auf dem GSM-Träger verdoppelt werden könnte, so würde sich die Suchzeit halbieren. Eine derartige Änderung kann in das bestehende GSM-System wohl nicht mehr eingefügt werden. Es ist allerdings nicht nötig, die Anzahl der FCCH-Datenpakte, die mittels eines GSM-Multiframes gesendet werden, zu verdoppeln, sondern es ist ausreichend, sicher zu stellen, daß doppelt so viele Datenpakete für den Zweck der Synchronisation genutzt werden können, unabhängig von dem Zweck, für den diese Datenpakete eigentlich übertragen werden.

Das SCH-Datenpakte verfügt wie das FCCH-Datenpaket über eine ausgeprägte Trainingssequenz, welche für Synchronisationsverfahren, die ein Korrelationsverfahren verwenden, genutzt werden kann. Bei den herkömmlichen Synchronisationsverfahren wird diese Trainingssequenz nur dazu genutzt, um sie über einen geringen Bereich, beispielsweise 20 Bits entsprechend der Zeitunsicherheit mit welcher das FCCH-Datenpaket-Timing bestimmt werden kann, zu korrelieren. Allerdings kann diese Korrelation auch auf ein größeres Zeitintervall ausgedehnt werden, beispielsweise auf das ganze Intervall einer Unterbrechungsphase. Auf diesem Weg kann das SCH-Datenpaket die Funktion des FCCH-Datenpaketes und des SCH-Datenpaketes erfüllen, d.h. es kann zur groben Detektion als auch zur feinen bitgenauen Timingdetektion und zur Informationsdetektion genutzt werden.

Die Schaltung der Mobilstation auf den ausschließlichen Empfang des SCH-Datenpaketes anstelle des FCCH-Datenpaketes zur Synchronisation würde nur eine kleine Verbesserung bringen, da sobald das SCH-Datenpaket detektiert ist, alle nötigen Information vorhanden wären, wohingegen nach der Detektion eines FCCH-Datenpaketes das entsprechende SCH-Datenpaket, das 120 ms später gesendet wird, noch zu detektieren ist, wodurch die durchschnittliche Detektionszeit um diese Dauer erhöht werden würde.

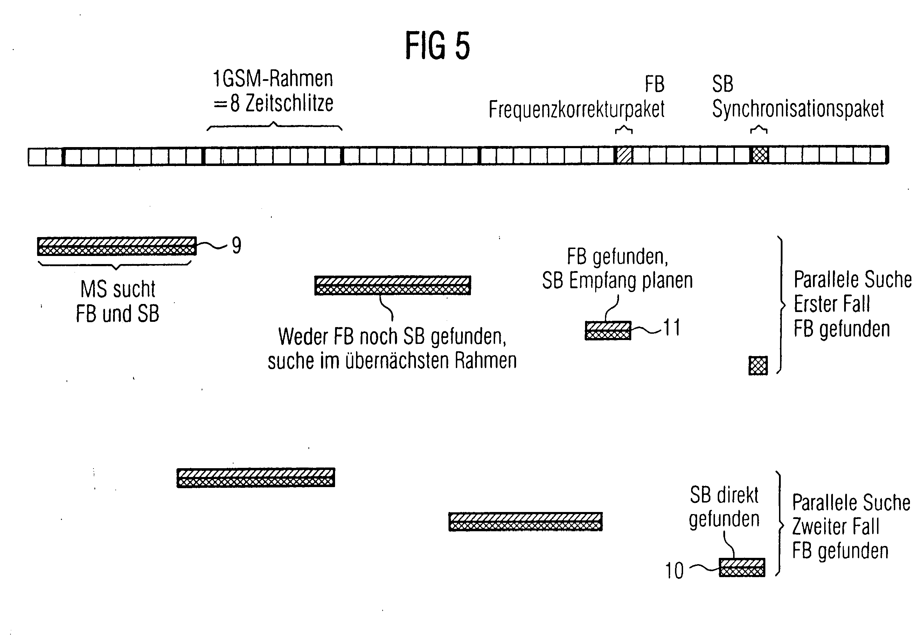

Wenn, wie in Figur 5 erläutert, beide, das FCCH-Datenpaket FB und das SCH-Datenpaket SB für die Synchronisation parallel genützt werden 9, so kann wie durch eine Verdopplung der FCCH-Datenpakete die gegenüber bekannten Verfahren doppelte Suchgeschwindigkeit erreicht werden.

Alternativ kann trotz einer Halbierung der Anzahl oder der Dauer der einzufügenden Unterbrechungsphasen die gleiche Suchgeschwindigkeit erreicht werden, wie bei herkömmlichen Verfahren.

Allgemein ermöglicht die Erfindung unabhängig von der Dauer und der Anzahl der Unterbrechungsphasen in etwa eine Halbierung der maximalen effektiven Gesamtdauer der Unterbrechungsphasen.

Gründe dafür, daß dieses neu vorgeschlagene Synchronisationsschema bisher nicht einsetzbar war treffen für eine GSM-Synchronisation während einer UMTS-Verbindung nicht zu, weil die Mobilstation ihren Oszillator entsprechend den Signalen, die von der UMTS-Basisstation empfangen werden, einstellen kann und der Frequenfehler dadurch relativ klein ist, und weil UMTS-Mobilstationen zur Rake-Verarbeitung ohnehin mit leistungsfähigen Korrelatoren ausgestattet sind, die während der Unterbrechungsphasen nicht benutzt werden und so zur Korrelation der SCH-Trainingssequenz verwendet werden können. Eine GSM Station hat zumindest bei der ersten Synchronisation oft einen erheblichen Frequenzfehler von mehreren KHz. Dabei funktioniert die Detektion mittels Korrelation auf eine bekannte Trainingssequenz nicht besonders gut, man muß daher andere Verfahren, welche sich nur für den FC-Burst eignen anwenden. Außerdem war die für die Korrelation auf die Trainingssequenz des SC Burst notwendige Rechenleistung bei der Einführung von GSM nicht wirtschaftlich in einer Mobilstation implementierbar, durch Fortschritte in der Prozessorentwicklung, und da eine UMTS Station ohnehin leistungsfähige Korrelatoren benötigt, ist das heutzutage kein Problem mehr.

Beispielsweise während sich die Mobilstation MS im Gesprächszustand oder Nutzdatenübertragungszustand mit einer aktuellen UMTS-Basisstation BS1 befindet, werden die Unterbrechungsphasen zu bestimmten Zeitpunkten/-abschnitten, zwischen denen feste oder unterschiedlich lange Zeiträume liegen können, in die Downlinkübertragung eingefügt, während derer die Empfangseinrichtung der Mobilstation MS auf den Empfang von Datenpaketen von jeweils benachbarten GSM-Basisstationen BS2,BS3 geschaltet wird.

Während der Unterbrechungsphase 2 unterbricht also die UMTS-Basisstation das Senden von Daten zur Mobilstation MS und die Mobilstation MS das Empfangen von Daten, die von der UMTS-Basisstation BS1 gesendet werden. Die Mobilstation MS führt mittels der Empfangseinrichtung EE eine Nachbarkanalsuche durch, indem die Steuereinrichtung STE die Empfangseinrichtung EE auf den Empfang von benachbarten GSM-Basisstationen BS2 schaltet, um gegebenenfalls auftretende Synchronisationsdatenpakete SB und Frequenzkorrekturdatenpakete FB, die von benachbarten GSM-Basisstationen BS2, BS3 gesendet werden, zu empfangen.

Unter dem Begriff "die Mobilstation wird auf den Empfang zu detektierender und auf den Empfang charakteristischer Datenpakete geschaltet" versteht man im Rahmen dieser Anmeldung auch, daß nach der üblichen analogen und digitalen Filterung und gegebenenfalls einer Derotation das empfangene Datenpaket sowohl mit der Trainingssequenz eines charakteristischen Datenpaketes als auch mit der Trainingssequenz eines zu detektierenden Datenpaketes entsprechenden Korrelationsfolge verglichen (z.B. korreliert) wird und somit gleichzeitig bzw. parallel nach zu detektierenden und nach charakteristischen Datenpaketen gesucht wird. Statt einer Korrelation können ggf. auch andere Verfahren angewandt werden (z.B. FIR, IRR oder andere Filter).

Da zur Einlegung der Unterbrechungsphasen zum Zwecke der Nachbarkanalsuche viele unterschiedliche Varianten möglich sind, bezeichnet im Rahmen dieser Anmeldung der Begriff "maximale effektive Gesamtdauer der Unterbrechungsphasen" die Summe aller Unterbrechungsphasen die maximal zur Beobachtung einer Nachbarbasisstation eingelegt werden. Dies schließt jedoch nicht aus, daß bei einer späteren Wiederholung der Nachbarkanalsuche weitere Unterbrechungsphasen eingelegt werden, wobei allerdings eine neue effektive Gesamtdauer der Unterbrechungsphasen gebildet wird. Die einzelnen Unterbrechungsphasen können dabei jeweils die Dauer eines Beobachtungsrahmens aufweisen, können aber auch von beliebig anderer Dauer sein. Die Dauer einer Unterbrechungsphase kann auch ein Vielfaches oder einen Bruchteil der Dauer eines Beobachtungsrahmens aufweisen. Es ist auch möglich, daß die einzelnen Unterbrechungsphasen unterschiedlicher Dauer sind.

Eine Ausführungsvariante der Erfindung sieht vor, daß statt wie im GSM-System üblich, alle 26 GSM-Rahmen (120ms) alle 104 GSM-Rahmen bzw. alle 480ms, was einer anderen Anzahl von Rahmen in einem anderen als dem GSM System, insbesondere einem CDMA System entsprechen kann, eine Unterbrechungsphase in die UMTS - Downlinkübertragung eingefügt wird, während derer die Nachbarkanalsuche durchgeführt wird. Obwohl dabei gegenüber dem Stand der Technik nur ein Viertel der Unterbrechungen benötigt werden, wird die halbe Suchgeschwindigkeit erreicht.

Statt alle 104 GSM-Rahmen bzw. alle 480ms eine Unterbrechungsphase einzufügen, stellte sich bei aufwendigen Stimulationen auch das Einfügen von Unterbrechungsphasen alle 39 GSM-Rahmen bzw. alle 180ms als besonders vorteilhaft heraus.

Nach einer weiteren Ausführungsvariante werden die Unterbrechungen nach jeweils 47 und 57 GSM Frames wiederholt d.h. der Abstand zwischen der ersten und zweiten Unterbrechung (zwischen dem Anfang der ersten und dem Anfang der zweiten Unterbrechungsphase) (1-2) bzw. der dritten und vierten Unterbrechungsphase(3-4) bzw. der fünften und sechsten Unterbrechungsphase(5-6) usw. beträgt 47*4,615ms = 216,92ms, der Abstand zwischen der zweiten und dritten Unterbrechungsphase(2-3) bzw. der vierten und fünften Unterbrechungsphase(4-5) bzw. der sechsten und siebten Unterbrechungsphase(6-7) usw. beträgt 57*4,615ms = 263,08ms. Obwohl die Abstände ungleichmäßig sind, sind die Abstände ähnlich genug, um noch eine günstige Verteilung der Unterbrechungen zu erreichen. Obwohl dabei gegenüber dem Stand der Technik nur die Hälfte der Unterbrechungen benötigt wird, wird die selbe Suchgeschwindigkeit erreicht.

Auch die im folgenden aufgeführten Wertepaare für die Abstände zwischen den Unterbrechungsphasen in Einheiten von GSM-Rahmen erwiesen sich bei aufwendigen Simulationen als entsprechend dem oben aufgeführten Paar (47, 57) besonders vorteilhaft anwendbar:
(25, 28) (28, 25) (49, 57) (43, 63) (33, 73) (12, 94) (10, 96) (8, 98) (8, 100) (57, 49) (12, 25) (16, 33) (33, 67) (29, 15) (35, 18) (63, 32) (87, 44) (49, 97) (26, 13)

Dabei können durch eine Addition oder Subtraktion von Vielfachen von 51 zu jeder Zahl weitere Paare gebildet werden, da sich das GSM Raster alle 51 Rahmen wiederholt; so können aus dem oben aufgeführten Beispiel (57, 47) auch die Paare(6, 47) oder (47, 57) gebildet werden.

Eine Ausführungsvariante der Erfindung sieht vor, alle 121,33 Rahmen bzw. alle 560 ms eine Unterbrechungsphase mit der Dauer von 2/3 eines Beobachtungsrahmens einzulegen.

Empfängt die Mobilstation MS in einer dieser Unterbrechungsphasen ein zu detektierendes Synchronisationsdatenpaket SB 10 so ist die Nachbarkanalsuche zumindest hinsichtlich dieser Basisstation BS2 beendet und die Mobilstation MS sendet gegebenenfalls entsprechende Steuerinformationen m zur ersten Basisstation BS1, der UMTS-Basisstation. Die UMTS-Basisstation fügt daraufhin zunächst keine weiteren Unterbrechungsphasen in den Downlink-Datenstrom d ein.

Da im GSM-System die Frequenzkorrekturdatenpakete einen Zeitrahmen vor den Synchronisationsdatenpaketen von den Basisstationen BS2,BS3 ausgesendet werden, kann die Mobilstation MS nach dem Empfang eines charakteristischen Frequenzkorrekturdatenpaketes FB 11 Informationen zur UMTS-Basisstation BS1 senden, die bewirken, daß zunächst nur noch eine weitere Unterbrechungsphase in den gesendeten Datenstrom eingelegt wird, um das in einem festen Abstand auf das Frequenzkorrekturdatenpaket folgende Synchronisationsdatenpaket zu empfangen. Aufgrund der Kenntnis über die relative zeitliche Position zwischen Frequenzkorrekturdatenpaket und Synchronisationsdatenpaket kann die zeitliche Lage der einzufügenden Unterbrechungsphasen an die zeitliche Lage des zu detektierenden Synchronisationsdatenpaketes angepaßt werden.

Alternativ können bei einer Ausgestaltungsvariante nach dem Empfang eines Frequenzkorrekturdatenpaketes die Unterbrechungsphasen weiter eingefügt werden, wobei die Mobilstation erst in der Unterbrechungsphase bzw. in dem Zeitraum, in der bzw. in dem ein Synchronisationsdatenpaket SB übertragen wird, auf den Empfang von Synchronisationsdatenpaketen geschaltet wird.

Eine Ausführungsvariante der Erfindung sieht vor, daß zunächst auf die Beobachtung einer ersten benachbarten GSM-Basisstation BS1 geschaltet wird, nach erfolgreicher Suche oder nach Kenntnis über eine nicht erfolgreiche Suche die Nachbarkanalsuche für eine oder mehrere weitere GSM-Basisstationen BS3 durchgeführt wird, und nach erfolgreicher und/oder erfolgloser Beendigung der Nachbarkanalsuche für mehreren benachbarten GSM-Basisstationen BS2,BS3 Informationen m zur Beeinflussung und/oder Einschränkung und/oder Beendigung und/oder gesteuerten Fortsetzung des Einlegens von Unterbrechungsphasen zur UMTS-Basisstation BS1 übermittelt werden. Dazu werden die zunächst ermittelten Ergebnisse der Nachbarkanalsuche mittels Speichereinrichtungen SPE in der Mobilstation MS zwischengespeichert.

Bei einer Weiterbildung der Erfindung werden die Ergebnisse der Nachbarkanalsuche, beispielsweise die Identität der Nachbarbasisstation und die Empfangsqualität oder Feldstärke der von den Nachbarbasisstationen empfangenen Signale zusammen mit den Informationen zur Beeinflussung des Einlegens von Unterbrechungsphasen als eine Nachricht, die gegebenenfalls auf mehrere Rahmen aufgeteilt sein kann, zur UMTS-Basisstation BS1 übermittelt.

Empfängt bei einer Ausführungsvariante der Erfindung die Mobilstation MS in einer dieser Unterbrechungsphasen ein zu detektierendes Synchronisationsdatenpaket, so ist die Nachbarkanalsuche zumindest hinsichtlich dieser Basisstation BS2 beendet und die Mobilstation MS sendet entsprechende Steuerinformationen m zur ersten Basisstation BS1, der UMTS-Basisstation. Die UMTS-Basisstation fügt daraufhin zunächst keine weiteren Unterbrechungsphasen in den Downlink-Datenstrom d ein. Dadurch kann die effektive Gesamtdauer der Unterbrechungsphasen weiter reduziert werden.

Eine Weiterbildung der Erfindung sieht vor, daß Elemente der digitalen Signalverarbeitung der Mobilstation, in Unterbrechungsphasen, in denen die Mobilstation aufgrund schon ausreichend vorliegender Informationen über die Nachbarbasisstationen nicht auf den Empfang von Datenpaketen geschaltet wird, abgeschaltet werden und somit der Stromverbrauch der Mobilstation reduziert wird.

Bei einer anderen Ausgestaltungsvariante der Erfindung handelt es sich auch bei der ersten Basisstation BS1 um eine GSM-Basisstation, die Daten gemäß einem GSM-Standard oder einem davon abgeleiteten Standard überträgt.

Bei einer anderen Ausgestaltungsvariante der Erfindung handelt es sich auch bei der ersten Basisstation BS1 um eine beliebige Basisstation, die Daten gemäß einem anderen Standard als dem GSM-Standard, insbesondere gemäß einem auf einem CDMA(Code Division Multiple Access System)-Verfahren basierenden Standard überträgt.

## Patentansprüche

1. Verfahren zur Datenübertragung in einem Mobilfunksystem, bei dem
- erste Daten (d) gemäß einem ersten Übertragungsverfahren von einer ersten Basisstation (BS1) zu einer Mobilstation (MS) gesendet werden,
- das Senden der ersten Daten (d) zu bestimmten Zeiten durch Unterbrechungsphasen (2) unterbrochen wird, in denen die Mobilstation (MS) das Empfangen erster Daten und/oder das Verarbeiten empfangener erster Daten (d) unterbricht, und in denen die Mobilstation (MS) auf den Empfang charakteristischer Datenpakete (dp), die gemäß einem zweiten Übertragungsverfahren von einer zweiten Basisstation (BS2) gesendet werden, geschaltet wird,
**dadurch gekennzeichnet, daß**
- während Unterbrechungsphasen (2), in denen die Mobilstation (MS) das Empfangen erster Daten und/oder das Verarbeiten empfangener erster Daten (d) unterbricht, und in denen die Mobilstation (MS) auf den Empfang charakteristischer Datenpakete (dp), die gemäß einem zweiten Übertragungsverfahren von einer zweiten Basisstation (BS2) gesendet werden, geschaltet wird, die Mobilstation (MS) auch auf den Empfang zu detektierender Datenpakete (dp), die gemäß einem zweiten Übertragungsverfahren von einer zweiten Basisstation (BS2) gesendet werden, geschaltet wird.

2. Verfahren nach Anspruch 1, bei dem Kenntnisse über die Rahmenstruktur der von einer zweiten Basisstation (BS2) gesendeten Datenpakete genützt werden, um die maximale effektive Gesamtdauer der Unterbrechungsphasen zu reduzieren.

3. Verfahren nach einem der vorhergehenden Ansprüche, bei dem bei guten Übertragungsverhältnissen zu einer gesicherten Detektion eines zu detektierenden Datenpaketes eine kleinere maximale effektive Gesamtdauer der Unterbrechungsphasen aufgewendet wird, als für den Fall nötig wäre, daß die Mobilstation (MS) nur auf den Empfang charakteristischer Datenpakete geschaltet wird.

4. Verfahren nach einem der vorhergehenden Ansprüche, bei dem Kenntnisse über die relative Lage der von einer zweiten Basisstation (BS2) gesendeten charakteristischen Datenpakete und zu detektierenden Datenpakete genützt werden, um die maximale effektive Gesamtdauer der Unterbrechungsphasen zu reduzieren.

5. Verfahren nach einem der vorhergehenden Ansprüche, bei dem nach dem Empfang eines charakteristischen Datenpaketes und/oder dem Empfang eines zu detektierenden Datenpaketes Informationen (m) von der Mobilstation (MS) zur ersten Basisstation (BS1) gesendet werden, die das Einlegen von Unterbrechungsphasen beeinflussen.

6. Verfahren nach Anspruch 5, bei dem nach dem Empfang eines zu detektierenden Datenpaketes Informationen (m) von der Mobilstation (MS) zur ersten Basisstation (BS1) gesendet werden, die bewirken, daß keine Unterbrechungsphasen mehr eingefügt werden.

7. Verfahren nach Anspruch 5, bei dem nach dem Empfang eines charakteristischen Datenpaketes Informationen (m) von der Mobilstation (MS) zur ersten Basisstation (BS1) gesendet werden, die bewirken, daß nach einem vorgegebenen Zeitabstand der zwischen charakteristischen Datenpaketen und zu detektierenden Datenpaketen liegt, noch eine Unterbrechungsphase zum Empfang des zu detektierenden Datenpaketes eingefügt wird.

8. Verfahren nach einem der vorhergehenden Ansprüche, bei dem
- die Mobilstation (MS) nach dem Empfang eines charakteristischen Datenpaketes und/oder eines zu detektierenden Datenpaketes einer zweiten Basisstation (BS2) auf den Empfang eines charakteristischen Datenpaketes und/oder eines zu detektierenden Datenpaketes einer oder mehrerer dritter Basisstationen (BS3) geschaltet wird, und
- nach dem Empfang eines charakteristischen Datenpaketes und/oder eines zu detektierenden Datenpaketes keiner, einer oder mehrerer dritter Basisstationen Informationen (m) von der Mobilstation (MS) zur ersten Basisstation (BS1) übermittelt werden zur Beeinflussung des Einlegens der Unterbrechungsphasen und/oder zur Übermittlung von Informationen über zweite und/oder dritte Basisstationen

9. Verfahren nach einem der vorhergehenden Ansprüche, bei dem die von der Mobilstation (MS) in einem vorgegebenen Zeitraum von einer zweiten Basisstation (BS2) empfangenen mittels Datenpaketen übertragenen Informationen in einem Speicher (SPE) gespeichert und/oder ausgewertet werden.

10. Verfahren nach einem der vorhergehenden Ansprüche, bei dem
Informationen zur Beeinflussung des Einlegens der Unterbrechungsphasen und Informationen über zweite und/oder dritte Basisstationen mittels derselben Nachricht übermittelt werden.

11. Verfahren nach einem der vorhergehenden Ansprüche, bei dem
die zweiten und/oder dritten Basisstationen Basisstationen eines GSM-Mobilfunksystems oder eines davon abgeleiteten Systems sind, und die zu detektierenden Datenpakte Synchronisationsdatenpakte und die charakteristischen Datenpakete Frequenzkorrekturdatenpakete sind.

12. Mobilstation (MS) mit
- Mitteln (EE) zum Empfang von ersten Daten, die gemäß einem ersten Übertragungsverfahren von einer ersten Basisstation (BS1) gesendet werden,
- Mitteln (EE) zum Empfang von Datenpaketen (dp), die gemäß einem zweiten Übertragungsverfahren von einer zweiten Basisstation (BS2) gesendet werden,
- Mitteln (STE) zum Einlegen von Pausen zumindest während bestimmter Empfangsphasen, in denen das Empfangen erster Daten und/oder das Verarbeiten empfangener erster Daten unterbrochen wird, und
- Mitteln (STE) zum Schalten auf den Empfang charakteristischer und zu detektierender Datenpakete, die von einer zweiten Basisstation (BS2) gemäß einem zweiten Übertragungsverfahren gesendet werden, während der bestimmten Empfangsphasen, in denen das Empfangen erster Daten und/oder das Verarbeiten empfangener erster Daten unterbrochen wird.

13. Mobilstation (MS) nach Anspruch 12, mit
- Mitteln (STE) zum Schalten auf den Empfang charakteristischer und zu detektierender Datenpakete, die von einer dritten Basisstation (BS3) gesendet werden.

14. Mobilstation (MS) nach einem der Ansprüche 12 oder 13, mit
- Mitteln (VE) zur Auswertung von in den charakteristischen und/oder zu detektierenden Datenpaketen enthaltenen Informationen, und
- Mitteln (SE) zum Senden von Informationen zur ersten Basisstation (BS1), die das Einlegen von Unterbrechungsphasen in Abhängigkeit von den in den charakteristischen und/oder zu detektierenden Datenpaketen enthaltenen Informationen beeinflussen.

15. Mobilstation (MS) nach einem der Ansprüche 12 bis 14 mit
- Mitteln (VE) zur Auswertung von in den charakteristischen und/oder zu detektierenden Datenpaketen enthaltenen Informationen, und
- Mitteln (STE) zum Abschalten bestimmter Elemente der Mobilstation (MS) in den Unterbrechungsphasen, nachdem ausreichende Informationen über zweite und/oder gegebenenfalls dritte Basisstationen ermittelt wurden.

16. Mobilstation (MS) nach einem der Ansprüche 12 bis 15, mit
Mitteln (SE) zum Senden von Informationen zur ersten Basisstation, die bewirken, daß keine Unterbrechungsphasen mehr eingefügt werden.

17. Mobilstation (MS) nach einem der Ansprüche 12 bis 16, mit
Mitteln (SE) zum Senden von Informationen zur ersten Basisstation, die bewirken, daß nach dem Empfang eines folgenden zu detektierenden Datenpaketes keine Unterbrechungsphasen mehr eingefügt werden.

18. Mobilstation (MS) nach einem der Ansprüche 12 bis 17, mit
Mitteln (SE) zum Senden von Informationen zur ersten Basisstation, die bewirken, daß nach einem vorgegebenen Zeitabstand, der zwischen charakteristischen Datenpaketen und zu detektierenden Datenpaketen liegt, noch eine Unterbrechungsphase zum Empfang des zu detektierenden Datenpaketes eingefügt wird.

19. Mobilstation (MS) nach einem der Ansprüche 12 bis 18, mit
- Mitteln (STE) zum Schalten auf den Empfang eines charakteristischen Datenpaketes und/oder eines zu detektierenden Datenpaketes einer oder mehrerer dritter Basisstationen nach dem Empfang eines charakteristischen Datenpaketes und/oder eines zu detektierenden Datenpaketes einer zweiten Basisstation, und
- Mitteln (SE) zum Senden von Informationen zur ersten Basisstation zur Beeinflussung des Einlegens der Unterbrechungsphasen und/oder zur Übermittlung von Informationen über zweite und/oder dritte Basisstationen nach dem Empfang eines charakteristischen Datenpaketes und/oder eines zu detektierenden Datenpaketes keiner, einer oder mehrerer dritter Basisstationen.

20. Mobilstation (MS) nach einem der Ansprüche 12 bis 19, mit
Mitteln (SPE,VE) zur Speicherung und/oder Auswertung von Datenpaketen, die in einem vorgegebenen Zeitraum von einer zweiten Basisstation empfangenen werden.

21. Basisstation (BS1) mit
- Mitteln (SE) zum Senden von ersten Daten (d) gemäß einem ersten Übertragungsverfahren zu einer Mobilstation (MS),
- Mitteln zum Einlegen von Unterbrechungsphasen zumindest während bestimmter Sendephasen (2), in denen die Mobilstation (MS) das Empfangen erster Daten (d) und/oder das Verarbeiten empfangener erster Daten (d) unterbricht, und in denen die Mobilstation (MS) auf den Empfang charakteristischer Datenpakete (dp) und zu detektierender Datenpakete (dp), die von einer zweiten Basisstation (BS2) gemäß einem zweiten Übertragungsverfahren gesendet werden, geschaltet wird,
- und mit Mitteln zum Einstellen der effektiven Gesamtdauer der Unterbrechungsphasen derart, dass die bei guten Übertragungsverhältnissen zu einer gesicherten Detektion nötige effektive Gesamtdauer der Unterbrechungsphasen kürzer ist als die bei guten Übertragungsverhältnissen zu einer gesicherten Detektion nötige effektive Gesamtdauer der Unterbrechungsphasen für den Fall, daß die Mobilstation nur auf den Empfang charakteristischer Datenpakete (dp) oder nur auf den Empfang zu detektierender Datenpakete (dp) geschaltet wird.

22. Basisstation (BS1) nach Anspruch 21, mit
Mitteln zur Ausnutzung der Kenntnisse über die Rahmenstruktur der von einer zweiten Basisstation (BS2) gesendeten Datenpakete, um die effektive Gesamtdauer der Unterbrechungsphasen zu reduzieren.

23. Basisstation (BS1) nach einem der Ansprüche 21 oder 22, mit
Mitteln zur Ausnutzung der Kenntnisse über die relative Lage der von einer zweiten Basisstation (BS2) gesendeten charakteristischen Datenpakete und zu detektierenden Datenpakete genützt werden, um die maximale effektive Gesamtdauer der Unterbrechungsphasen zu reduzieren.

24. Basisstation (BS1) nach einem der Ansprüche 21 bis 23, mit
- Mitteln zum Empfang von Informationen, die das Einlegen von Unterbrechungsphasen beeinflussen, und
- Mitteln zur Beeinflussung des Einlegens von Unterbrechungsphasen in Abhängigkeit von den Informationen, die das Einlegen von Unterbrechungsphasen beeinflussen.

25. Basisstation (BS1) nach einem der Ansprüche 21 bis 24, mit
- Mitteln zum Übertragen von Daten von und zu einer Mobilstation (MS),
- Mitteln zum Einlegen von Unterbrechungsphasen zumindest während bestimmter Übertragungsphasen (2),
- Mitteln zum Empfang von Informationen, die das Einlegen von Unterbrechungsphasen beeinflussen,
- Mitteln zur Beeinflussung des Einlegens von Unterbrechungsphasen in Abhängigkeit von einem Empfangsergebnis der Mobilstation.

26. Basisstation (BS1) nach einem der Ansprüche 21 bis 25, mit
Mitteln zum Empfangen und Verarbeiten von Informationen, die bewirken, daß keine Unterbrechungsphasen mehr eingefügt werden.

27. Basisstation (BS1) nach einem der Ansprüche 21 bis 26, mit
Mitteln zum Empfangen und Verarbeiten von Informationen, die bewirken, daß nach dem Empfang eines folgenden zu detektierenden Datenpaketes keine Unterbrechungsphasen mehr eingefügt werden.

28. Basisstation (BS1) nach einem der Ansprüche 21 bis 27, mit
Mitteln zum Empfangen und Verarbeiten von Informationen, die bewirken, daß nach einem vorgegebenen Zeitabstand der zwischen charakteristischen Datenpaketen und zu detektierenden Datenpaketen liegt, noch eine Unterbrechungsphase zum Empfang des zu detektierenden Datenpaketes eingefügt wird.

29. Basisstation (BS1) nach einem der Ansprüche 21 bis 28, mit
Mitteln zum Empfangen und Verarbeiten von Informationen zur Beeinflussung des Einlegens der Unterbrechungsphasen und/oder von Informationen über zweite und/oder dritte Basisstationen.

## Claims

1. Method for data transmission in a mobile radio system, in which
- first data (d) are transmitted by a first base station (BS1) to a mobile station (MS) using a first transmission method,
- the transmission of the first data (d) is interrupted at specific times by interruption phases (2) in which the mobile station (MS) interrupts the reception of first data and/or the processing of received first data (d), and in which the mobile station (MS) is switched to reception of characteristic data packets (dp) which are transmitted by a second base station (BS2) using a second transmission method,
**characterized in that**
- during interruption phases (2), in which the mobile station (MS) interrupts the reception of first data and/or the processing of received first data (d), and in which the mobile station (MS) is switched to reception of characteristic data packets (dp) which are transmitted by a second base station (BS2) using a second transmission method, the mobile station (MS) is also switched to reception of data packets (dp) which are to be detected and are transmitted by a second base station (BS2) using a second transmission method.

2. Method according to claim 1, in which knowledge about the frame structure of the data packets transmitted by a second base station (BS2) is used in order to reduce the maximum effective total duration of the interruption phases.

3. Method according to one of the preceding claims, in which, if the transmission conditions are good, a shorter maximum effective total duration of the interruption phases is used for secure detection of a data packet which is to be detected than would be necessary in the situation where the mobile station (MS) is switched only to receive characteristic data packets.

4. Method according to one of the preceding claims, in which knowledge about the relative position of the characteristic data packets transmitted by a second base station (BS2) and of data packets which are to be detected is used in order to reduce the maximum effective total duration of the interruption phases.

5. Method according to one of the preceding claims, in which, after receiving a characteristic data packet and/or receiving a data packet which is to be detected, information (m) which influences the insertion of interruption phases is transmitted by the mobile station (MS) to the first base station (BS1).

6. Method according to claim 5, in which, after receiving a data packet which is to be detected, information (m) which results in no more interruption phases being inserted is transmitted by the mobile station (MS) to the first base station (BS1).

7. Method according to claim 5, in which, after receiving a characteristic data packet, information (m) is transmitted by the mobile station (MS) to the first base station (BS1), which results in another interruption phase for receiving the data packet which is to be detected being inserted after a predetermined time interval between characteristic data packets and data packets which are to be detected.

8. Method according to one of the preceding claims, in which after receiving a characteristic data packet and/or a data packet which is to be detected from a second base station (BS2), the mobile station (MS) is switched to receive a characteristic data packet and/or a data packet which is to be detected from one or more third base stations (BS3), and
- after receiving a characteristic data packet and/or a data packet which is to be detected from no, one or a number of third base stations, information (m) is transmitted by the mobile station (MS) to the first base station (BS1) in order to influence the insertion of the interruption phases and/or in order to transmit information via second and/or third base stations.

9. Method according to one of the preceding claims, in which
the information transmitted by means of data packets by the mobile station (MS) and received by a second base station (BS2) in a predetermined time period is stored and/or evaluated in a memory (SPE).

10. Method according to one of the preceding claims, in which
information for influencing the insertion of the interruption phases and information about second and/or third base stations are transmitted by means of the same message.

11. Method according to one of the preceding claims, in which
the second and/or third base stations are base stations in a GSM mobile radio system or in a system derived from such a system, the data packets which are to be detected are synchronization data packets, and the characteristic data packets are frequency correction data packets.

12. Mobile station (MS) having
- means (EE) for receiving first data which are transmitted by a first base station (BS1) using a first transmission method,
- means (EE) for receiving data packets (dp) which are transmitted by a second base station (BS2) using a second transmission method,
- means (STE) for inserting pauses at least during specific reception phases in which the reception of first data and/or the processing of received first data is interrupted, and
- means (STE) for switching to reception of characteristic data packets and data packets which are to be detected and are transmitted by a second base station (BS2) using a second transmission method, during the specific reception phases in which the reception of first data and/or the processing of received first data is interrupted.

13. Mobile station (MS) according to claim 12, having
- means (STE) for switching to reception of data packets which are characteristic, are to be detected and are transmitted by a third base station (BS3).

14. Mobile station (MS) according to one of claims 12 or 13, having
- means (VE) for evaluating information which is contained in the characteristic data packets and/or data packets which are to be detected, and
- means (SE) for transmitting information to the first base station (BS1), which influences the insertion of interruption phases as a function of information which is contained in the characteristic data packets and/or in the data packets which are to be detected.

15. Mobile station (MS) according to one of claims 12 to 14, having
- means (VE) for evaluating information which is contained in the characteristic data packets and/or in the data packets which are to be detected, and
- means (STE) for switching off specific elements in the mobile station (MS) in the interruption phases once sufficient information has been determined about second and/or, possibly, third base stations.

16. Mobile station (MS) according to one of claims 12 to 15, having
means (SE) for transmitting information to the first base station which results in no more interruption phases being inserted.

17. Mobile station (MS) according to one of claims 12 to 16, having
means (SE) for transmitting information to the first base station which results in no more interruption phases being inserted after receiving a subsequent data packet which is to be detected.

18. Mobile station (MS) according to one of claims 12 to 17, having
- means (SE) for transmitting information to the first base station which results in another interruption phase for receiving the data packet which is to be detected being inserted after a predetermined time interval which is between characteristic data packets and data packets which are to be detected.

19. Mobile station (MS) according to one of claims 12 to 18, having
- means (STE) for switching to reception of a characteristic data packet and/or of a data packet which is to be detected from one or more third base stations after receiving a characteristic data packet and/or a data packet which is to be detected from a second base station, and
- means (SE) for transmitting information to the first base station in order to influence the insertion of the interruption phases and/or in order to transmit information about second and/or third base stations after receiving a characteristic data packet and/or a data packet which is to be detected from no, one or a number of third base stations.

20. Mobile station (MS) according to one of claims 12 to 19, having
means (SPE, VE) for storing and/or evaluating data packets which are received by a second base station in a predetermined time period.

21. Base station (BS1) having
- means (SE) for transmitting first data (d) to a mobile station (MS) using a first transmission method,
- means for inserting interruption phases at least during specific transmission phases (2) in which the mobile station (MS) interrupts the reception of first data (d) and/or the processing of received first data (d), and in which the mobile station (MS) is switched to reception of characteristic data packets (dp) and of data packets (dp) which are to be detected and are transmitted by a second base station (BS2),
- and means for setting up the effective total duration of the interruption phases in such a way that the effective total duration, which is required for secure detection in good transmission conditions, of the interruption phases is shorter than the effective total duration, which is required for secure detection in good transmission conditions, of the interruption phases in the situation where the mobile station is switched only to reception of characteristic data packets (dp) or only to reception of data packets (dp) which are to be detected.

22. Base station (BS1) according to claim 21, having means for using the knowledge about the frame structure of the data packets transmitted by a second base station (BS2) in order to reduce the effective total duration of the interruption phases.

23. Base station (BS1) according to one of claims 21 or 22, having
means for using the knowledge about the relative position of the characteristic data packets and of the data packets which are to be detected, transmitted by a second base station (BS2) are used in order to reduce the maximum effective total duration of the interruption phases.

24. Base station (BS1) according to one of claims 21 to 23, having
- means for receiving information which influences the insertion of interruption phases, and
- means for influencing the insertion of interruption phases as a function of the information which influences the insertion of interruption phases.

25. Base station (BS1) according to one of claims 21 to 24, having
- means for transmitting data from and to a mobile station (MS),
- means for inserting interruption phases at least during specific transmission phases (2),
- means for receiving information which influences the insertion of interruption phases,
- means for influencing the insertion of interruption phases as a function of a reception result at the mobile station.

26. Base station (BS1) according to one of claims 21 to 25, having
means for receiving and processing information which results in no more interruption phases being inserted.

27. Base station (BS1) according to one of claims 21 to 26, having
means for receiving and processing information which results in no more interruption phases being inserted after receiving a subsequent data packet which is to be detected.

28. Base station (BS1) according to one of claims 21 to 27, having
means for receiving and processing information which results in another interruption phase for receiving the data packet which is to be detected being inserted after a predetermined time interval between characteristic data packets and data packets which are to be detected.

29. Base station (BS1) according to one of claims 21 to 28, having
means for receiving and processing information for influencing the insertion of the interruption phases and/or information about second and/or third base stations.

## Revendications

1. Procédé pour la transmission de données dans un système de téléphonie mobile, dans lequel
- des premières données (d) sont envoyées selon un premier procédé de transmission d'une première station de base (BS1) à une station mobile (MS),
- l'émission des premières données (d) est interrompue à certains moments par des phases d'interruption (2), lors desquelles la station mobile (MS) interrompt la réception de premières données et/ou le traitement de premières données (d) reçues, et lors desquelles la station mobile (MS) est commutée sur la réception de paquets de données (dp) caractéristiques, qui sont envoyés selon un second procédé de transmission par une seconde station de base (BS2),
**caractérisé en ce que**
- pendant des phases d'interruption (2), lors desquelles la station mobile (MS) interrompt la réception de premières données et/ou le traitement de premières données (d) reçues, et au cours desquelles la station mobile (MS) est commutée sur la réception de paquets de données (dp) caractéristiques, qui sont envoyés selon un second procédé de transmission par une seconde station de base (BS2), la station mobile (MS) est commutée également sur la réception de paquets de données (dp) à détecter, qui sont envoyés selon un second procédé de transmission par une deuxième station de base (BS2).

2. Procédé selon la revendication 1, dans lequel des connaissances sur la structure de trame des paquets de données envoyés par une seconde station de base (BS2) sont utilisées pour réduire la durée globale effective maximale des phases d' interruption.

3. Procédé selon l'une quelconque des revendications précédentes, dans lequel, dans le cas de bonnes conditions de transmission pour une détection sûre d'un paquet de données à détecter, on utilise une durée globale effective maximale des phases d'interruption plus petite que dans le cas où la station mobile (MS) serait commutée seulement sur la réception de paquets de données caractéristiques.

4. Procédé selon l'une quelconque des revendications précédentes, dans lequel des connaissances sur la position relative des paquets de données caractéristiques, envoyées par une seconde station de base (BS2), et des paquets de données à détecter sont utilisés pour réduire la durée globale effective maximale des phases d'interruption.

5. Procédé selon l'une quelconque des revendications précédentes, dans lequel, après la réception d'un paquet de données caractéristique et/ou la réception d'un paquet de données à détecter, des informations (m) sont envoyées de la station mobile (MS) à la première station de base (BS1) qui influencent l'introduction de phases d'interruption.

6. Procédé selon la revendication 5, dans lequel, après la réception d'un paquet de données à détecter, des informations (m) sont envoyées de la première station mobile (MS) à la première station de base (BS1), qui font qu'on n'insère plus de phases d'interruption.

7. Procédé selon la revendication 5, dans lequel, après la réception d'un paquet de données caractéristique, des informations (m) sont envoyées de la station mobile (MS) à la première station de base (BS1) qui font que, après un laps de temps prédéfini, qui se situe entre des paquets de données caractéristiques et des paquets de données à détecter, on insère encore une phase d'interruption pour la réception du paquet de données à détecter.

8. Procédé selon l'une quelconque des revendications précédentes, dans lequel
- la station mobile (MS) est commutée après la réception d'un paquet de données caractéristique et/ou d'un paquet de données à détecter d'une seconde station de base (BS2) sur la réception d'un paquet de données caractéristique et/ou d'un paquet de données à détecter d'une ou de plusieurs troisièmes stations de base (BS3), et
- après la réception d'un paquet de données caractéristique et/ou d'un paquet de données à détecter d'aucune station de base ou d'une ou de plusieurs troisièmes stations de base, des informations (m) sont transmises de la station mobile (MS) à la première station de base (BS1) pour influencer l'insertion des phases d'interruption et/ou pour la transmission d'informations sur des secondes et/ou troisièmes stations de base.

9. Procédé selon l'une quelconque des revendications précédentes, dans lequel des informations transmises au moyen de paquets de données et reçues d'une seconde station de base (BS2) par la station mobile (MS) dans un laps de temps prédéfini sont stockées dans une mémoire (SPE) et/ou sont analysées.

10. Procédé selon l'une quelconque des revendications précédentes, dans lequel des informations destinées à influencer l'insertion des phases d'interruption et des informations sur des secondes et/ou troisièmes stations de base sont transmises au moyen du même message.

11. Procédé selon l'une quelconque des revendications précédentes, dans lequel les secondes et/ou troisièmes stations de base sont des stations de base d'un système de téléphonie mobile GSM ou d'un système dérivé de celui-ci et les paquets de données à détecter sont des paquets de données de synchronisation et les paquets de données caractéristiques sont des paquets de données de correction de fréquence.

12. Station mobile (MS) avec
- des moyens (EE) pour la réception de premières données qui sont envoyées selon un premier procédé de transmission par une première station de base (BS1) ;
- des moyens (EE) pour la réception de paquets de données (dp), qui sont envoyés selon un second procédé de transmission par une seconde station de base (BS2),
- des moyens (STE) pour l'insertion de pauses au moins pendant certaines phases de réception, lors desquelles la réception de premières données et/ou le traitement de premières données reçues est interrompu, et
- des moyens (STE) pour la commutation sur la réception de paquets de données caractéristiques et de paquets de données à détecter, qui sont envoyés par une seconde station de base (BS2) selon un second procédé de transmission, pendant les phases de réception définies au cours desquelles la réception de premières données et/ou le traitement de premières données reçues est interrompu.

13. Station mobile (MS) selon la revendication 12, avec
- des moyens (STE) pour la commutation sur la réception de paquets de données caractéristiques et de paquets de données à détecter, qui sont envoyés par une troisième station de base (BS3).

14. Station mobile selon l'une quelconque des revendications 12 ou 13, avec
- des moyens (VE) pour l'analyse d'informations contenues dans les paquets de données caractéristiques et/ou les paquets de données à détecter, et
- des moyens (SE) pour l'envoi d'informations à la première station de base (BS1), qui influencent l'insertion de phases d'interruption en fonction des informations contenues dans les paquets de données caractéristiques et/ou les paquets de données à détecter.

15. Station mobile (MS) selon l'une quelconque des revendications 12 à 14, avec
- des moyens (VE) pour l'analyse d'informations contenues dans les paquets de données caractéristiques et/ou les paquets de données à détecter, et
- des moyens (STE) pour la déconnexion de certains éléments de la station mobile (MS) dans les phases d'interruption, une fois que des informations suffisantes sur des secondes stations de base et/ou le cas échéant des troisièmes stations de bases ont été déterminées.

16. Station mobile (MS) selon l'une quelconque des revendications 12 à 15, avec
des moyens (SE) pour l'envoi d'informations à la première station de base, qui font qu'aucune phase d'interruption n'est plus insérée.

17. Station mobile (MS) selon l'une quelconque des revendications 12 à 16, avec
des moyens (SE) pour l'envoi d'informations à la première station de base, qui font qu'aucune phase d'interruption n'est plus insérée après la réception d'un paquet de données suivant à détecter.

18. Station mobile (MS) selon l'une quelconque des revendications 12 à 17, avec
des moyens (SE) pour l'envoi d'informations à la première station de base, qui font que, après un laps de temps prédéfini qui se situe entre des paquets de données caractéristiques et des paquets de données à détecter, encore une phase d'interruption est insérée pour la réception du paquet de données à détecter.

19. Station mobile (MS) selon l'une quelconque des revendications 12 à 18, avec
- des moyens (STE) pour la commutation sur la réception d'un paquet de données caractéristique et/ou d'un paquet de données à détecter d'une ou de plusieurs troisièmes stations de base après la réception d'un paquet de données caractéristique et/ou d'un paquet de données à détecter d'une seconde station de base, et
- des moyens (SE) pour l'envoi d'informations à la première station de base pour influencer l'insertion des phases d'interruption et/ou pour la transmission d'informations sur des secondes et/ou troisièmes stations de base après la réception d'un paquet de données caractéristique et/ou d'un paquet de données d'aucune station de base ou d'une ou de plusieurs troisièmes stations de base.

20. Station mobile (MS) selon l'une quelconque des revendications 12 à 19, avec des moyens (SPE, VE) pour le stockage et/ou l'analyse de paquets de données qui sont reçus d'une seconde station de base dans un laps de temps prédéfini.

21. Station de base (BS1) avec
- des moyens (SE) pour l'émission de premières données (d) selon un premier procédé de transmission à une station mobile (MS),
- des moyens pour l'insertion de phases d'interruption au moins pendant certaines phases d'émission (2), lors desquelles la station mobile (MS) interrompt la réception de premières données (d) et/ou le traitement de premières données (d) reçues, et lors desquelles la station mobile (MS) est commutée sur la réception de paquets de données (dp) caractéristiques et de paquets de données (dp) à détecter, qui sont envoyés par une deuxième station de base (BS2) selon un second procédé de transmission,
- et avec des moyens pour le réglage de la durée globale effective des phases d'interruption de telle sorte que la durée globale effective, nécessaire dans le cas de bonnes conditions de transmission pour une détection sûre, des phases d'interruption est plus courte que la durée globale effective, nécessaire dans le cas de bonnes conditions de transmission pour une détection sécurisée, des phases d'interruption dans le cas où la station mobile n'est commutée que sur la réception de paquets de données (dp) caractéristiques ou seulement sur la réception de paquets de données (dp) à détecter.

22. Station de base (BS1) selon la revendication 21, avec des moyens pour l'utilisation des connaissances sur la structure de trame des paquets de données envoyés par une seconde station de base (BS2), afin de réduire la durée globale effective des phases d'interruption.

23. Station de base (BS1) selon l'une quelconque des revendications 21 ou 22, avec des moyens pour l'utilisation des connaissances sur la position relative des paquets de données caractéristiques envoyés par une seconde station de base (BS2) et des paquets de données à détecter afin de réduire la durée globale effective maximale des phases d'interruption.

24. Station de base (BS1) selon l'une quelconque des revendications 21 à 23, avec
- des moyens pour la réception d'informations qui influencent l'insertion des phases d'interruption, et
- des moyens pour influencer l'insertion de phases d'interruption en fonction des informations qui influencent l'insertion des phases d'interruption.

25. Station de base (BS1) selon l'une quelconque des revendications 21 à 24, avec
- des moyens pour la transmission de données à partir d'une station de base et vers une station de base (MS),
- des moyens pour l'insertion de phases d'interruption au moins pendant certaines phases de transmission (2),
- des moyens pour la réception d'informations qui influencent l'insertion de phases d'interruption,
- des moyens pour influencer l'insertion de phases d'interruption en fonction d'un résultat de réception de la station mobile.

26. Station de base (BS1) selon l'une quelconque des revendications 21 à 25, avec des moyens pour la réception et le traitement d'informations qui font qu'aucune phase d'interruption n'est plus insérée.

27. Station de base (BS1) selon l'une quelconque des revendications 21 à 26, avec des moyens pour la réception et le traitement d'informations qui font que, après la réception d'un paquet de données suivant à détecter, aucune phase d'interruption n'est plus insérée.

28. Station de base (BS1) selon l'une quelconque des revendications 21 à 27, avec des moyens pour la réception et le traitement d'informations, qui font que, après un laps de temps prédéfini, qui se situe entre des paquets de données caractéristiques et des paquets de données à détecter, encore une phase d'interruption pour la réception du paquet de données à détecter est insérée.

29. Station de base (BS1) selon l'une quelconque des revendications 21 à 28, avec des moyens pour la réception et le traitement d'informations pour influencer l'insertion des phases d'interruption et/ou pour la réception et le traitement d'informations concernant des secondes et/ou troisièmes stations de base.
